# EUROPÄISCHE PATENTSCHRIFT

(11) **EP 2 059 410 B1**
(45) Veröffentlichungstag und Bekanntmachung des Hinweises auf die Patenterteilung: **25.12.2013**
(21) Anmeldenummer: 07801529.4
(22) Anmeldetag: 07.08.2007
(51) Int. Cl.: B60N 2/22, B60N 2/42, B60N 2/62

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, NOTAMMENT SIÈGE DE VÉHICULE AUTOMOBILE

(30) Priorität: 07.09.2006 DE 102006041915
(43) Veröffentlichungstag der Anmeldung: 20.05.2009
(73) Patentinhaber: RECARO AUTOMOTIVE Ltd. & Co. KG, 73230 Kirchheim unter Teck (DE)
(72) Erfinder: SCHLENKER, Ulf, 73268 Erkenbrechtsweiler (DE)
(74) Vertreter: Siekmann, Gunnar
(86) Internationale Anmeldenummer: PCT/EP2007/006953
(87) Internationale Veröffentlichungsnummer: WO 2008/028548

(56) Entgegenhaltungen:
- EP-A- 1 400 397
- DE-A1- 19 512 012
- DE-A1-102004 016 315

## Beschreibung

Die Erfindung betrifft einen Fahrzeugsitz, insbesondere einen Kraftfahrzeugsitz, mit den Merkmalen des Oberbegriffs des Anspruches 1.

Bei einem bekannten Fahrzeugsitz weist die Lehne als tragende Struktur eine einstückig ausgebildete Lehnenschale auf. Andere Fahrzeugsitze weisen als tragende Struktur Rahmen auf. Bei derartigen Fahrzeugsitzen ist es bekannt, wie beispielsweise in der GB 2 318 045 A oder der DE 196 43 977 C2 beschrieben, einen Teil der Lehne im Crashfall nach vorne schwenken zu lassen. Außerdem ist aus der DE 10 2004 016 315 A1 ein Fahrzeugsitz bekannt, bei dessen Sitzteil die Oberschenkelunterstützung und die Sitzteil-Seitenwangen miteinander verbunden und als gemeinsame Einheit in Sitzlängsrichtung verfahrbar sind.

Ein Fahrzeugsitz der eingangs genannten Art ist aus der EP 1 400 397 A2 bekannt. Die Lehne umfasst zwei starre Seitenholme, eine starr mit den Seitenholmen verbundene erste Lehnenschale, welche das Becken stützt, und eine zweite Lehnenschale, welche die Schultern und den Kopf stützt. Die zweite Lehnenschale ist mittels einer Kulissenführung relativ zur ersten Lehnenschale beweglich, wobei diese Bewegung zwangsgekoppelt mit einer gegenläufigen Höhenverstellung des Sitzteils des Fahrzeugsitzes ist.

Die DE 195 12 012 A1 beschreibt einen Fahrzeugsitz in Rahmenbauweise, dessen Lehne zinnenförmig in zwei Lehnenteile geteilt ist. Das untere Lehnenteil stützt das Becken und die Rumpfmitte, während das relativ zum unteren Lehnenteil verschiebliche und schwenkbare obere Lehnenteil die Schultern und den Kopf stützt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die tragende Struktur der Lehne umfasst eine erste Lehnenschale und eine zweite Lehnenschale, welche beide in einer Schalenbauweise gefertigt sind. Mittels der zweiten Lehnenschale, welche relativ zur ersten Lehnenschale verschieblich und/oder schwenkbar ist, kann eine ergonomische Komforteinstellung der Lehne erfolgen, d.h. die Lehne kann in Höhe und/oder Neigung an den Körper des Insassens angepasst werden unter Beibehaltung einer seitlichen Abstützung. Außerdem kann eine Crashaktivität eingebaut werden. Im Fall eines Heckcrashs kann die Lehne als Rampe wirken, entlang derer der Körper des Insassens nach oben steigt und im Extremfall die Kopfstütze passiert. Die Crashaktivität besteht vorzugsweise darin, dass sich die zweite Lehnenschale im Crashfall relativ zur ersten Lehnenschale bewegt. Diese Bewegung der zweiten Lehnenschale wird vorzugsweise dazu genutzt, der besagten schädlichen Körperbewegung entgegenzuwirken und den Körper des Insassens in der sicheren Position zu halten, so dass die Kopfstütze ihre volle Wirkung entfalten kann.

Unter einer Schale soll ein tragendes Strukturelement verstanden werden, welches für sich alleine den ihm zugedachten Flächenbereich ausfüllt und so auf der Rückseite (im Falle einer Zuordnung zur Lehne) oder Unterseite (im Falle einer Zuordnung zum Sitzteil) sichtbar bleibt, ohne dort einer Verblendung oder dergleichen zu bedürfen. Diese unverblendeten, ungepolsterten und unbezogenen Seiten sind vorzugsweise auch speziell als Sichtflächen ausgebildet. Im Gegensatz dazu soll unter einem Rahmen ein tragendes Strukturelement verstanden werden, welches den ihm zugedachten Flächenbereich nur teilweise ausfüllt und so auf den sichtbaren Seiten einer Verblendung bedarf.

Die beiden erfindungsgemäß vorgesehenen Lehnenschalen samt eventuell angeformten und/oder angebrachten Bereichen sind entsprechend auf ihrer dem Insassen zugewandten Vorder- oder Innenseite in an sich bekannter Weise gepolstert und bezogen. Vorzugsweise ist der Bezug an der Lehnenschale befestigt (abgehängt) und das Polster zwischen Bezug und Lehnenschale angeordnet. Der Bezug kann auch das Polster umschließen unter Bildung von Polsterpads, welche an der Lehnenschale angebracht sind. Mischformen sind ebenfalls möglich.

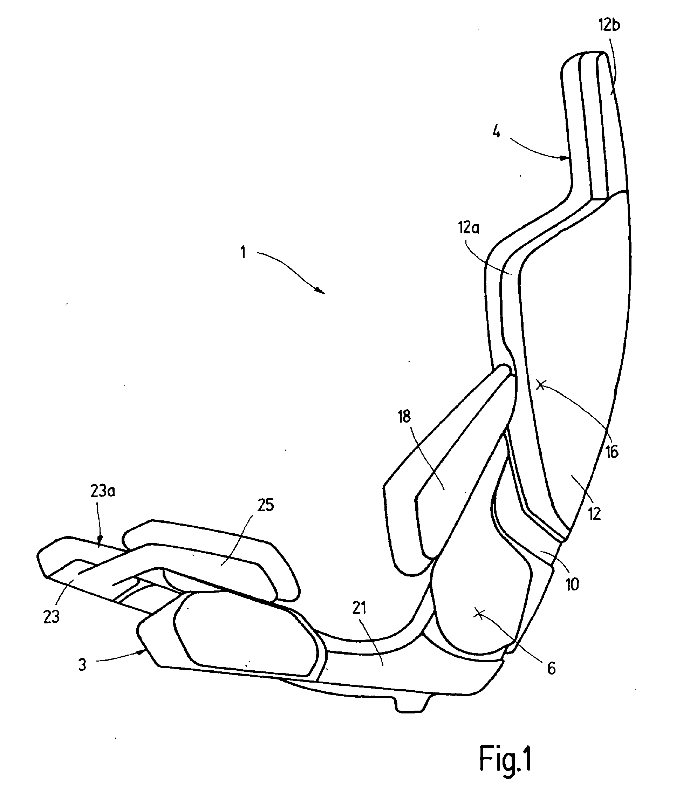

Im folgenden ist die Erfindung anhand eines in der Zeichnung dargestellten Ausführungsbeispiels näher erläutert. Es zeigen
- Fig. 1: eine Seitenansicht des Ausführungsbeispiel,

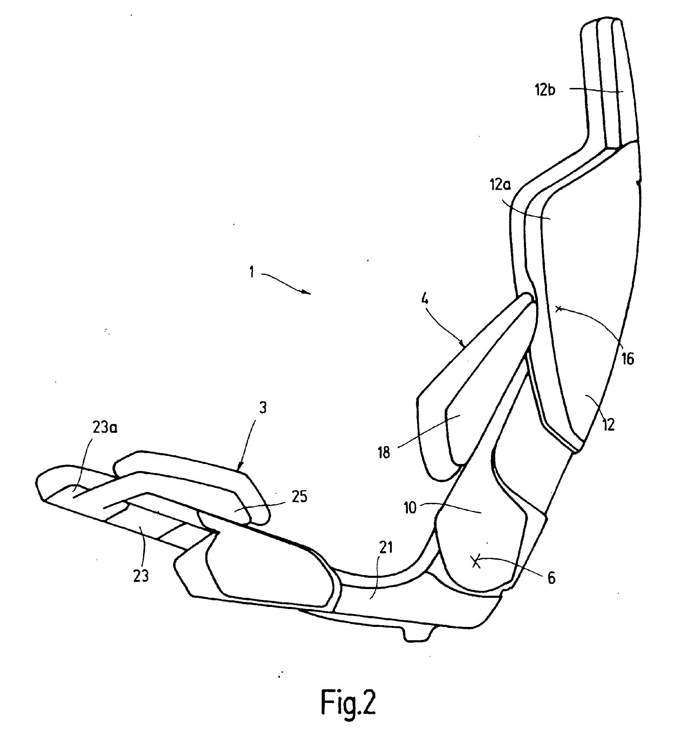

- Fig. 2: eine Seitenansicht des Ausführungsbeispiel mit einer gegenüber Fig. 1 höher eingestellten Lehne,

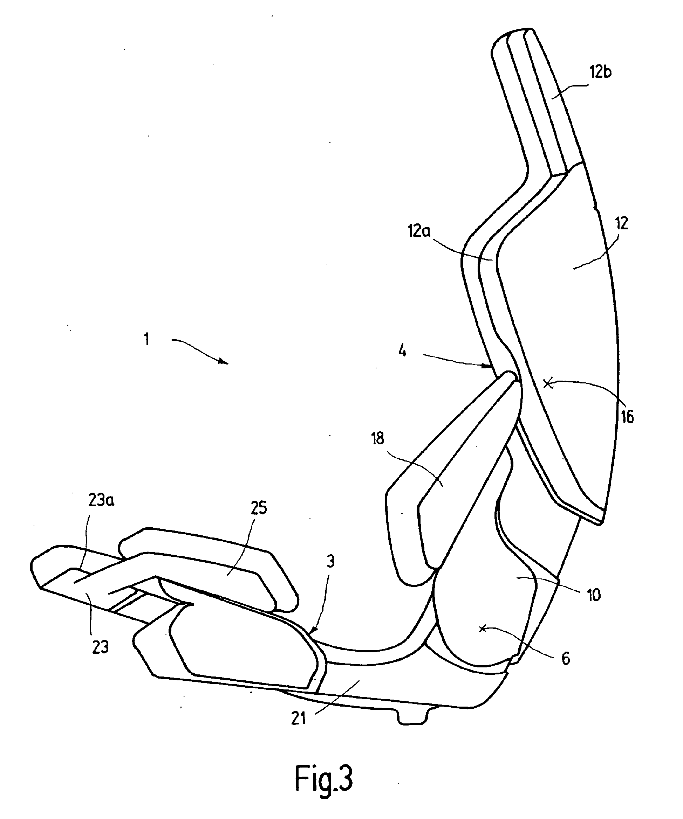

- Fig. 3: eine Seitenansicht des Ausführungsbeispiel mit einer aufgrund der Crashfunktion gegenüber Fig. 2 geschwenkten Lehne, und

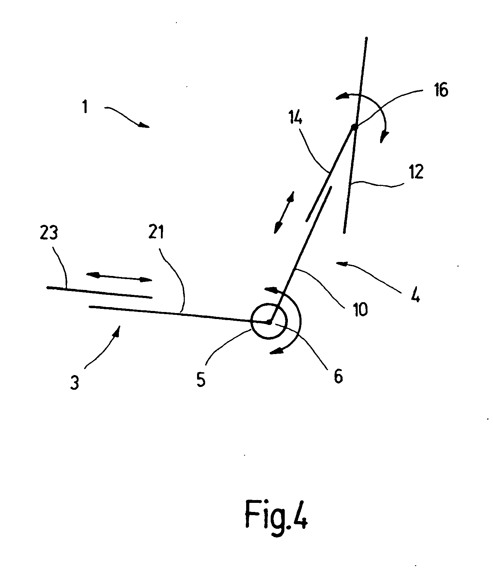

- Fig. 4: eine schematische Darstellung der relativ zueinander beweglichen Komponenten des Ausführungsbeispiels.

Ein Fahrzeugsitz 1 ist als Vordersitz für ein Kraftfahrzeug vorgesehen. Der Fahrzeugsitz 1 umfasst ein Sitzteil 3 und eine Lehne 4, welche mittels Beschlägen 5 beidseitig am Sitzteil 3 angebracht und relativ zu diesem um eine Lehnenschwenkachse 6 schwenkbar, vorliegend neigungseinstellbar (manuell oder motorisch) und freischwenkbar, ist. Soweit die Beschläge 5 Getriebebeschläge sind, bei denen zwei Beschlagteile eine Drehbewegung mit überlagerter Taumelbewegung relativ zueinander ausführen, ist die Lehnenschwenkachse 6 durch das Zentrum des oberen Beschlagteils definiert, was vorliegend mit der Schwenkachse für das zentrische Freischwenken zusammenfällt. Das Sitzteil 3 definiert durch seine Erstreckung in Fahrtrichtung die Sitzlängsrichtung, während die Lehne 4 durch ihre Erstreckung nach schräg oben die Lehnenlängsrichtung definiert. Die Sitzlängsrichtung und die Lehnenlängsrichtung spannen eine Ebene auf, zu welcher die die Sitzquerrichtung definierende Lehnenschwenkachse 6 senkrecht steht.

Die tragende Struktur des Fahrzeugsitzes 1 ist in einer Schalenhybridbauweise ausgeführt, d.h. einzelne, in Schalenbauweise hergestellte Schalen, beispielsweise aus glasfaserverstärktem Kunststoff, sind durch metallische Elemente ergänzt. Die vom Insassen abgewandten Seiten der Schalen sind unverblendet, ungepolstert und unbezogen und daher sichtbar. Die tragende Struktur der Lehne 4 umfasst eine erste Lehnenschale 10, welche mittels der Beschläge 5 am Sitzteil 3 angebracht ist, und eine zweite Lehnenschale 12, welche - bezüglich der Lehnenlängsrichtung - höher als die erste Lehnenschale 10 angeordnet ist und diese auf der Rückseite teilweise übergreift. Ein Schlitten 14 ist in Lehnenlängsrichtung relativ zur ersten Lehnenschale 10 verschieblich angeordnet. Beispielsweise können hierzu Schienenpaare auf der Vorderseite der ersten Lehnenschale 10 vom Polster verdeckt angebracht sein. Am Schlitten 14 ist die zweite Lehnenschale 12 um eine zur Lehnenschwenkachse 6 parallele, horizontale Gelenkachse 16 schwenkbar angelenkt, beispielsweise mittels zweier miteinander fluchtender Gelenke.

Oberhalb der Gelenkachse 16 sind an der zweiten Lehnenschale 12 seitlich Schulterstützen 12a und oben eine Kopfstütze 12b angeformt, wobei auch eine mehrteilige Ausbildung möglich wäre. Am Schlitten 14 sind seitlich Lehnen-Seitenwangen 18 angebracht, welche seitlich der ersten Lehnenschale 10 angeordnet sind. Die beiden Lehnenschalen 10 und 12 (samt angeformten Bereichen und Lehnen-Seitenwangen 18) sind auf ihrer dem Insassen zugewandten Vorderseite (bzw. Innenseite) in an sich bekannter Weise gepolstert und bezogen. Die vom Insassen abgewandte Rückseiten (bzw. Außenseiten) der beiden Lehnenschalen 10 und 12 (samt angeformten und angebrachten Bereichen) sind ungepolstert und unbezogen als Sichtflächen ausgebildet. Insgesamt ergibt sich eine stark konturierte Lehne 4.

Die Lehne 4 weist verschiedene Möglichkeiten einer Komforteinstellung auf, d.h. einer Anpassung an die Körperform des Insassens. Für eine Höheneinstellung kann der Schlitten 14 in Lehnenlängsrichtung verfahren werden, vorzugsweise motorisch oder pneumatisch/hydraulisch. Mit dem Schlitten 14 ändern auch die zweite Lehnenschale 12 samt angeformten Bereichen und die Lehnen-Seitenwangen 18 ihre Höhe. Für eine Neigungseinstellung können zum einen die Beschläge 5 betätigt werden, also die gesamte Lehne 4 relativ zum Sitzteil 3 um die Lehnenschwenkachse 6 bewegt werden. Zum anderen kann die zweite Lehnenschale 12 relativ zum Schlitten 14 um die Gelenkachse 16 geschwenkt werden, was vorzugsweise ebenfalls motorisch oder pneumatisch/hydraulisch erfolgt. Für die Schwenkbewegung nach hinten dient die erste Lehnenschale 10 als Anschlag. Die Lehnen-Seitenwangen 18 können in an sich bekannter Weise in ihrer Form veränderlich sein, vorzugsweise pneumatisch.

Die Lehne 4 weist auch eine Crashaktivität auf, die einer Rampenwirkung der Lehne 4 nach oben im Falle eines Heckcrashs entgegenwirkt. Zusätzlich zur Neigungseinstellung um die Gelenkachse 18 ist eine Wippe vorgesehen, wie sie beispielsweise aus der GB 2 318 045 A oder der DE 196 43 977 C2 bekannt ist, deren diesbezüglicher Offenbarungsgehalt ausdrücklich einbezogen wird. Im Falle eines Heckcrashs drückt der Insasse mit dem oberen Teil seines Rückens unterhalb der Gelenkachse 18 wenigstens mittelbar gegen die zweite Lehnenschale 12, vorzugsweise gegen eine mit der zweiten Lehnenschale 12 verbundene Platte. Dadurch schwenkt die zweite Lehnenschale 12 nach vorne und fängt den sich nach oben bewegenden Körper des Insassens besser ab.

Auch das Sitzteil 3 ist mehrteilig aufgebaut. Eine erste Sitzteilschale 21 ist nach unten mit der Struktur des Kraftfahrzeuges verbunden, gegebenenfalls unter Zwischenlage von Sitzschienen für die Längseinstellung, und trägt mittels der Beschläge 5 die Lehne 4. Eine zweite Sitzteilschale 23 ist in Sitzlängsrichtung relativ zur ersten Sitzteilschale 21 verschieblich angeordnet, beispielsweise mittels Schienenpaaren auf der Oberseite der ersten Sitzteilschale 21 vom Polster verdeckt angebracht. Die bezüglich der ersten Sitzteilschale 21 weiter vorne angeordnete zweite Sitzteilschale 23 weist eine Oberschenkelunterstützung 23a sowie seitlich je eine Sitzteil-Seitenwange 25 auf. Die zweite Sitzteilschale 23 dient der Komforteinstellung, d.h. einer Anpassung an die Körperform des Insassens. Die zweite Sitzteilschale 23 kann in Sitzlängsrichtung verfahren werden, vorzugsweise motorisch oder pneumatisch/hydraulisch, wodurch die Länge der Sitzfläche eingestellt und damit eine verbesserte Unterstützung der Oberschenkel von unten erreicht wird. Zugleich bewegen sich die Sitzteil-Seitenwangen 25 mit, wodurch die seitliche Abstützung der Oberschenkel auch für längere Oberschenkel erhalten bleibt.

Insbesondere wenn der Fahrzeugsitz 1 nur in geringem Umfang motorisch einstellbar ist, kann es vorteilhaft sein, wenn eine Zwangskopplung zwischen der Bewegung der zweiten Sitzschale 23 in Sitzlängsrichtung und der Bewegung der zweiten Lehnenschale 12 in Lehnenlängsrichtung besteht. Wenn dann die Lehnenschale 12 weiter nach oben gefahren wird, fährt die zweite Sitzschale 23 weiter nach vorne. Für die umgekehrte Bewegungsrichtung gilt entsprechendes.

### Bezugszeichenliste

- 1: Fahrzeugsitz
- 3: Sitzteil
- 4: Lehne
- 5: Beschlag
- 6: Lehnenschwenkachse
- 10: erste Lehnenschale
- 12: zweite Lehnenschale
- 12a: Schulterstütze
- 12b: Kopfstütze
- 14: Schlitten
- 16: Gelenkachse
- 18: Lehnen-Seitenwange
- 21: erste Sitzteilschale
- 23: zweite Sitzteilschale
- 23a: Oberschenkelunterstützung
- 25: Sitzteil-Seitenwange

## Patentansprüche

1. Fahrzeugsitz, insbesondere Kraftfahrzeugsitz, mit einer sich in einer Lehnenlängsrichtung erstreckenden Lehne (4), welche wenigstens eine erste Lehnenschale (10) und eine zweite Lehnenschale (12) umfasst, welche relativ zur ersten Lehnenschale (10) verschieblich und/oder schwenkbar ist, **dadurch gekennzeichnet, dass** die erste und die zweite Lehnenschale (10, 12) in einer Schalenbauweise ausgebildet sind, und die zweite Lehnenschale (12) an einem Schlitten (14) angeordnet ist, welcher relativ zur ersten Lehnenschale (10) in Lehnenlängsrichtung verschieblich ist, wobei am Schlitten (14) seitlich Lehnen-Seitenwangen (18) angeordnet sind und die zweite Lehnenschale (12) um eine horizontale Gelenkachse (16) schwenkbar am Schlitten (14) angelenkt ist.

2. Fahrzeugsitz nach Anspruch 1, **dadurch gekennzeichnet, dass** die zweite Lehnenschale (12) - bezüglich der Lehnenlängsrichtung - höher als die erste Lehnenschale (10) angeordnet ist.

3. Fahrzeugsitz nach einem der vorhergehenden Ansprüche, **dadurch gekennzeichnet, dass** die zweite Lehnenschale (12) seitliche Schulterstützen (12a) und/oder eine Kopfstütze (12b) aufweist, welche an der zweiten Lehnenschale (12) insbesondere angeformt sind.

4. Fahrzeugsitz nach einem der vorhergehenden Ansprüche, **dadurch gekennzeichnet, dass** die zweite Lehnenschale (12) sich im Crashfall relativ zur ersten Lehnenschale (10) bewegt, insbesondere im Falle eines Heckcrashs nach vorne schwenkt.

5. Fahrzeugsitz nach einem der vorhergehenden Ansprüche, **dadurch gekennzeichnet, dass** die zweite Lehnenschale (12) die erste Lehnenschale (10) auf der Rückseite teilweise übergreift.

6. Fahrzeugsitz nach einem der vorhergehenden Ansprüche, **dadurch gekennzeichnet, dass** die Komforteinstellungen bezüglich Höhe und/oder Neigung der Lehne (4) motorisch und/oder pneumatisch/hydraulisch erfolgen.

7. Fahrzeugsitz nach einem der vorhergehenden Ansprüche, **dadurch gekennzeichnet, dass** ein Sitzteil (3) vorgesehen ist, welches eine erste Sitzteilschale (21) und eine relativ zur ersten Sitzteilschale (10) in Sitzlängsrichtung verschiebliche und/oder schwenkbare zweite Sitzteilschale (23) umfasst.

8. Fahrzeugsitz nach Anspruch 7, **dadurch gekennzeichnet, dass** zwischen der Bewegung der zweiten Sitzschale (23) in Sitzlängsrichtung und der Bewegung der zweiten Lehnenschale (12) in Lehnenlängsrichtung eine Zwangskopplung besteht.

9. Fahrzeugsitz nach Anspruch 7 oder 8, **dadurch gekennzeichnet, dass** die zweite Sitzschale (23) eine Oberschenkelunterstützung (23a) und/oder Sitzteil-Seitenwangen (25) aufweist.

## Claims

1. A vehicle seat, in particular a motor vehicle seat, with a backrest (4) extending in a backrest longitudinal direction, which backrest comprises at least a first backrest shell (10) and a second backrest shell (12), which is displaceable and/or pivotable relative to the first backrest shell (10), **characterized in that** the first and the second backrest shell (10, 12) are constructed in a shell construction type, and the second backrest shell (12) is arranged on a slide (14) which is displaceable relative to the first backrest shell (10) in longitudinal direction of the backrest, wherein backrest side bolsters (18) are arranged laterally on the slide (14), and the second backrest shell (12) is articulated pivotably on the slide (14) about a horizontal joint axis (16).

2. The vehicle seat according to Claim 1, **characterized in that** the second backrest shell (12) - with respect to the longitudinal direction of the backrest - is arranged higher than the first backrest shell (10).

3. The vehicle seat according to one of the preceding claims, **characterized in that** the second backrest shell (12) has lateral shoulder supports (12a) and/or a head support (12b), which are formed in particular on the second backrest shell (12).

4. The vehicle seat according to one of the preceding claims, **characterized in that** the second backrest shell (12) moves relative to the first backrest shell (10) in the case of a crash, in particular pivots forward in the case of a rear crash.

5. The vehicle seat according to one of the preceding claims, **characterized in that** the second backrest shell (12) partially overlaps the first backrest shell (10) on the rear side.

6. The vehicle seat according to one of the preceding claims, **characterized in that** the comfort adjustments with regard to height and/or inclination of the backrest (4) take place in a motor-driven manner and/or pneumatically/hydraulically.

7. The vehicle seat according to one of the preceding claims, **characterized in that** a seat part (3) is provided, which comprises a first seat part shell (21) and a second seat part shell (23) which is displaceable and/or pivotable relative to the first seat part shell (10) in longitudinal direction of the seat.

8. The vehicle seat according to Claim 7, **characterized in that** a positive coupling exists between the movement of the second seat shell (23) in longitudinal direction of the seat and the movement of the second backrest shell (12) in longitudinal direction of the backrest.

9. The vehicle seat according to Claim 7 or 8, **characterized in that** the second seat shell (23) has a thigh support (23a) and/or seat part side bolsters (25).

## Revendications

1. Siège de véhicule, notamment siège de véhicule automobile, comportant un dossier (4) s'étendant dans une direction longitudinale de dossier, qui comprend au moins une première coque de dossier (10) et une deuxième coque de dossier (12), qui est déplaçable et/ou pivotante relativement à la première coque de dosseur (10), **caractérisé en ce que** la première et la deuxième coques de dossier (10, 12) sont réalisées en une structure à coque, et la deuxième coque de dossier (12) est disposée dans un chariot (14), qui est déplaçable relativement à la première coque de dosseur (10) dans la direction longitudinale de dossier, dans lequel sur le chariot (14) des faces latérales de dossier (18) sont disposées et la deuxième coque de dossier (12) est raccordée de manière articulée au chariot (14) de manière pivotante autour d'un axe d'articulation (16) horizontal.

2. Siège de véhicule selon la revendication 1, **caractérisé en ce que** la deuxième coque de dossier (12) est disposée plus haut que la première coque de dossier (10) - par rapport à la direction longitudinale de dossier.

3. Siège de véhicule selon une des revendications précédentes, **caractérisé en ce que** la deuxième coque de dossier (12) présente des appuis d'épaule latéraux (12a) et/ou un appui de tête (12b), qui sont façonnés notamment sur la deuxième coque de dossier (12).

4. Siège de véhicule selon une des revendications précédentes, caractérisé e ce que la deuxième coque de dossier (12) se déplace en cas de collision relativement à la première coque de dosseur (10), notamment pivote vers l'avant en cas de choc arrière.

5. Siège de véhicule selon une des revendications précédentes, **caractérisé en ce que** la deuxième coque de dossier (12) vient partiellement en prise avec la première coque de dossier (10) sur le côté arrière.

6. Siège de véhicule selon une des revendications précédentes, **caractérisé en ce que** les réglages de confort en ce qui concerne la hauteur et/ou l'inclinaison du dossier (4) se font de manière motorisée et/ou pneumatique/hydraulique.

7. Siège de véhicule selon une des revendications précédentes, **caractérisé en ce que** une partie de siège (3) est prévue, qui comprend une première coque partielle de siège (21) et une deuxième coque partielle de siège (23) déplaçable et/ou pivotante par rapport à la première coque partielle de siège (10) dans la direction longitudinale du siège.

8. Siège de véhicule selon la revendication 7, **caractérisé en ce que** entre le mouvement de la deuxième coque de siège (23) dans la direction longitudinale du siège et le mouvement de la deuxième coque de dossier (12) dans la direction longitudinale du dossier, un couplage contraint est institué.

9. Siège de véhicule selon les revendications 7 ou 8, **caractérisé en ce que** la deuxième coque de siège (23) présente un soutien de pan supérieur (23a) et/ou des faces latérales de partie de siège (25).
